# EUROPEAN PATENT APPLICATION

(11) **EP 4 708 476 A2**
(43) Date of publication of application: **11.03.2026**
(21) Application number: 25200249.8
(22) Date of filing: 04.09.2025
(51) Int. Cl.: H01M 50/107, H01M 50/152, H01M 50/179, H01M 50/56, H01M 50/562

(54) **ELECTRODE OUTPUT COMPONENT, COVER PLATE ASSEMBLY, AND BATTERY CELL**

(30) Priority: 06.09.2024 CN 202422194878 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); ZENG, Hao, Huizhou, Guangdong, 516039 (CN); ZHENG, Xu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN)
(74) Representative: Berggren Oy

(57) **Abstract**

The present disclosure provides an electrode output component (001) for a battery cell, a cover plate assembly (002), and a battery cell, relating to the field of batteries technologies. The electrode output component (001) includes a pole (011) and a terminal (012). An outer peripheral surface of the pole (011) is provided with an abutting portion (111). The terminal (012) includes a first through hole (121). The first through hole (121) is sleeved on one end of the pole (011) and abuts against the abutting portion (111) along an axial direction of the pole (011). A contact portion (013) between the pole (011) and the terminal (012) forms a structure engaged with each other.

## Description

### TECHNICAL FIELD

The present disclosure relates to the field of battery technologies, and in particular, to an electrode output component, a cover plate assembly, and a battery cell.

### BACKGROUND

An electrode output component is an important component communicated with inside and outside of a battery cell. The electrode output component includes a terminal and a pole. One end of the pole is connected to a terminal located outside the battery cell, and another end is connected to an electrode assembly inside the battery cell. The terminal is in stopping fit with a cover plate of the battery cell, so as to prevent the pole from falling into the battery cell. The terminal and the pole are fixed by welding. Due to the influence of factors such as a welding stress, the connection reliability between the terminal and the pole is relatively poor. Especially when the terminal is subjected to an external force such as a thrust force or a torsion force, connection portions between the terminal and the pole are damaged, so that the connection reliability between the terminal and the pole is reduced. As such, the overcurrent capacity between the terminal and the pole is reduced.

### SUMMARY

Embodiments of the present disclosure provide an electrode output component, a cover plate assembly, and a battery cell to improve the connection reliability between a terminal and a pole.

According to a first aspect, the embodiments of the present disclosure provide an electrode output component. The electrode output component includes a pole and a terminal. An outer peripheral surface of the pole is provided with an abutting portion. The terminal includes a first through hole. The first through hole is sleeved on one end of the pole and abuts against the abutting portion along an axial direction of the pole. The pole and the terminal are engaged with each other.

In an embodiment, the pole includes the contact portion in contact with the terminal, and a metal material of a part of the contact portion is different from a metal material of the terminal.

In an embodiment, the pole includes a first metal member and a second metal member connected to each other. The terminal is sleeved on the first metal member. The abutting portion is disposed on an outer peripheral surface of the second metal member. The metal material of the terminal is different from a metal material of the second metal member.

In an embodiment, the second metal member is provided with a groove. One end of the first metal member is embedded in the groove. A portion of the first metal member fitting with the terminal is a first outer peripheral surface. The second metal member includes a second outer peripheral surface. The second outer peripheral surface is located on a side of the abutting portion away from a groove bottom of the groove. The first outer peripheral surface and the second outer peripheral surface are arranged coaxially.

In an embodiment, a material of the terminal is aluminum material, and a material of the second metal member is copper material; or a material of the terminal and a material of the first metal member are aluminum material, and a material of the second metal member is copper material.

In an embodiment, the pole includes a first segment and a second segment connected to each other along the axial direction. An outer diameter of the second segment is greater than an outer diameter of the first segment. An outer peripheral surface of the second segment is connected to an outer peripheral surface of the first segment through a first planar surface. The first planar surface is perpendicular to an axis of the pole. The first planar surface is the abutting portion.

In an embodiment, the terminal is provided with a first through hole for the pole to pass through. The pole includes a first segment and a second segment connected to each other along the axial direction. An outer diameter of the second segment is greater than an outer diameter of the first segment. An outer peripheral surface of the second segment is connected to an outer peripheral surface of the first segment through a first inclined surface. An end of the first inclined surface connected to the outer peripheral surface of the first segment is disposed closer to an axis of the pole than an end of the first inclined surface connected to the outer peripheral surface of the second segment. The first inclined surface is the abutting portion. A side of a hole wall of the first through hole close to the abutting portion is provided with a second inclined surface. The first inclined surface is configured to be engaged with the second inclined surface after the pole is axially pressed.

In an embodiment, in a longitudinal cross section of the electrode output component, an included angle between a straight line where the first inclined surface is located and a bus bar where the outer peripheral surface of the second segment is located is α, where α satisfies: 110°≤α≤160°.

In an embodiment, the terminal is provided with a first through hole for the pole to pass through. The pole includes a first segment and a second segment connected to each other along the axial direction. An outer diameter of the second segment is greater than an outer diameter of the first segment. An outer peripheral surface of the second segment is connected to an outer peripheral surface of the first segment through a first arc surface. An end of the first arc surface connected to the outer peripheral surface of the first segment is disposed closer to an axis of the pole than an end of the first arc surface connected to the outer peripheral surface of the second segment. The first arc surface is the abutting portion. A side of a hole wall of the first through hole close to the abutting portion is provided with a second arc surface. The first arc surface is configured to be engaged with the second arc surface after the pole is axially pressed.

In an embodiment, the pole includes a first segment and a second segment connected to each other along the axial direction. An outer diameter of the second segment is greater than an outer diameter of the first segment. A step is provided at a connection between the first segment and the second segment. A step groove is provided on a side of a hole wall of the first through hole close to the abutting portion. The step is configured to be engaged with a groove wall of the step groove after the pole is axially pressed.

According to a second aspect, the embodiments of the present disclosure provide a cover plate assembly. The cover plate assembly includes a cover plate, an upper plastic member, a lower plastic member, a current collecting member, a sealing ring, and the aforementioned electrode output component. The cover plate includes a mounting hole. The pole passes through the mounting hole, and the terminal is located on one side of the cover plate. The upper plastic member is disposed between the terminal and the cover plate. The lower plastic member is disposed on another side of the cover plate. One end of the current collecting member is connected to an end of the pole away from the terminal. The sealing ring is disposed between the pole and a side wall of the mounting hole.

According to a third aspect, the embodiments of the present disclosure provide a battery cell. The battery cell includes a casing, an electrode assembly, and the aforementioned cover plate assembly. The casing includes an accommodating cavity. The electrode assembly is disposed in the accommodating cavity. The cover plate is connected to the casing and closes an opening of the accommodating cavity, and another end of the current collecting member is connected to the electrode assembly.

Beneficial effects of the embodiments of the present disclosure are as follows.

In the embodiments of the present disclosure, the terminal in stopping fit with the pole along the axial direction, and a structure engaged with each other is formed at the contact portion between the terminal and the pole. As such, the connection strength between the terminal and the pole may be improved, thereby improving the connection reliability between the terminal and the pole.

### BRIEF DESCRIPTION OF THE DRAWINGS

In order to provide clearer explanations of the technical solutions in the embodiments of the present disclosure, it is to be noted that the accompanying drawings in the following description of the embodiments are merely some of embodiments of the present disclosure, and that other accompanying drawings may be obtained by the skilled person in the art without involving creative labor.
FIG. 1 is a schematic view of a structure of a first electrode output component according to the embodiments of the present disclosure.
FIG. 2 is a schematic view of a structure of a pole according to the embodiments of the present disclosure.
FIG. 3 is a schematic view of a structure where the pole is axially pressed, so that a portion of the pole is in contact with the terminal deforms toward the terminal according to the embodiments of the present disclosure.
FIG. 4 is a schematic view of a structure of a second electrode output component according to the embodiments of the present disclosure.
FIG. 5 is a schematic view of a structure of a third electrode output component according to the embodiments of the present disclosure.
FIG. 6 is a schematic view of a structure of another pole according to the embodiments of the present disclosure.
FIG. 7 is a schematic view of a structure of a fourth electrode output component according to the embodiments of the present disclosure.
FIG. 8 is a schematic view of a structure of a pole of a fourth electrode output component according to the embodiments of the present disclosure.
FIG. 9 is a schematic view of a structure of a terminal of a fourth electrode output component according to the embodiments of the present disclosure.
FIG. 10 is an enlarged view of part A in FIG. 8.
FIG. 11 is a schematic view of a structure of a fifth electrode output component according to the embodiments of the present disclosure.
FIG. 12 is a schematic view of a structure of a sixth electrode output component according to the embodiments of the present disclosure.
FIG. 13 is an enlarged view of B in FIG. 12.
FIG. 14 is a schematic view of a structure of a seventh electrode output component according to the embodiments of the present disclosure.
FIG. 15 is a schematic view of a structure of a cover plate assembly according to the embodiments of the present disclosure.

### Description of reference numbers are as follows:

001, electrode output component;
011, pole; 111, abutting portion; 112, first metal member; 113, second metal member; 1131, groove; 114, first segment; 115, second segment; 116, first planar surface; 117, first inclined surface; 118, step; 119, stamping groove;
012, terminal; 121, first through hole; 122, second inclined surface; 123, step groove;
013, contact portion;
002, cover plate assembly; 021, cover plate; 022, upper plastic member; 023, lower plastic member; 024, current collecting member.

### DETAILED DESCRIPTION

The technical solutions in the embodiments of the present disclosure will be described clearly and completely hereafter with reference to accompanying drawings of the embodiments of the present disclosure. Apparently, the described embodiments are only a part of but not all embodiments of the present disclosure. Based on the embodiments of the present disclosure, all other embodiments obtained by those skilled in the art without involving any creative labor are within the scope of the present disclosure.

In the description of the present disclosure, it should be understood that, unless specified or limited otherwise, the terms "connected", "coupled", and "fixed" are used broadly, and may be, for example, fixed connections, detachable connections, or integrated connections; may be mechanical connections, may also be electrical connections or communicate with each other; may also be direct connections or indirect connections via intervening structures; may also be inner communications of two elements or interaction relationships between two elements, may also be direct connections or indirect connections via intervening structures; may also be inner communications of two elements or interaction relationships between two elements. Those ordinary skilled in the art may understand the specific meanings of the above-described terms in the present disclosure according to specific situations.

The terms "include", "comprise", or any other variation thereof are intended to cover a non-exclusive inclusion, such that a process, method, article, or device that includes a list of elements includes not only those elements but also other elements not expressly listed, or elements inherent to such a process, method, article, or device. An element proceeded by "comprises a..." does not, without more constraints, preclude the existence of additional identical elements in the process, method, article, or device that comprises the element.

In the descriptions of the embodiments of the present disclosure, words such as "example" or "for example" are used to indicate examples, descriptions, or descriptions. Any embodiment or design scheme described as an "example" or "for example" in the embodiments of the present disclosure is not explained as being more preferred or having more advantages than another embodiment or design scheme. The use of words such as "example" or "e.g." is intended to present a relative concept in a clear manner.

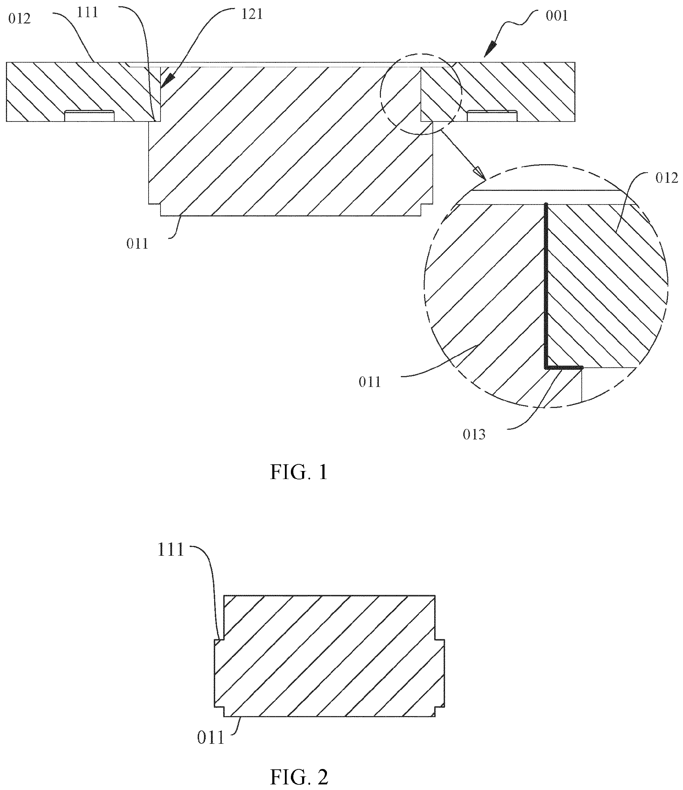

Referring to FIG. 1 and FIG. 2, FIG. 1 is a schematic view of a structure of an electrode output component 001 according to the embodiments of the present disclosure, and FIG. 2 is a schematic view of a structure of a pole 011 according to the embodiments of the present disclosure. The embodiments of the present disclosure provide an electrode output component 001. The electrode output component 001 includes a pole 011 and a terminal 012. An outer peripheral surface of the pole 011 is provided with an abutting portion 111. The terminal 012 includes a first through hole 121. The first through hole 121 is sleeved on one end of the pole 011 and abuts against the abutting portion 111 along an axial direction of the pole 011. A portion where the pole 011 is in contact with the terminal 012 is configured to deform after the pole 011 is axially pressed, so as to form a mutually engaged structure at the contact portion between the pole 011 and the terminal 012, as shown in FIG. 1. A thick solid line shown in an enlarged view of FIG. 1 is the contact portion between the pole 011 and the terminal 012.

The terminal 012 is provided with a first through hole 121 for the pole 011 to pass through.

It may be understood that the contact portion between the pole 011 and the terminal 012 at least include a contact portion between the pole 011 and a hole wall of the first through hole 121 and a contact portion formed by the pole 011 abutting against the terminal 012 along the axial direction.

It may be understood that an outer diameter of the abutting portion 111 is greater than an aperture of the first through hole 121, so that the terminal 012 is capable of abutting against the abutting portion 111. As such, the abutting portion 111 may be a shoulder structure disposed on the pole 011, may be a collar structure disposed on the pole 011, or may be a bump disposed on the outer peripheral surface of the pole 011.

It may be understood that before the pole 011 is axially pressed, the pole 011 is vertically fixed on a supporting table of a stamping device, and the terminal 012 is fixed with a clamp. Then, a punch of the stamping device applies pressure to an end of the pole 011 away from the supporting table. Since one end of the pole 011 is limited by the supporting table and another end of the pole 011 is extruded by the punch, the pole 011 is radially expanded to deform toward the terminal 012. In this way, a fitting gap between the pole 011 and the terminal 012 may be filled with the radially expanded pole 011. During a process of the pole 011 deforming toward the terminal 012, the terminal 012 may also deform due to extrusion from the pole 011. As such, the mutually engaged structure is formed between the pole 011 and the terminal 012 to achieve a tight connection between the pole 011 and the terminal 012. After the stamping is completed, the pole 011 and the terminal 012 are welded at one or two ends of the first through hole 121, so as to improve the connection reliability between the pole 011 and the terminal 012.

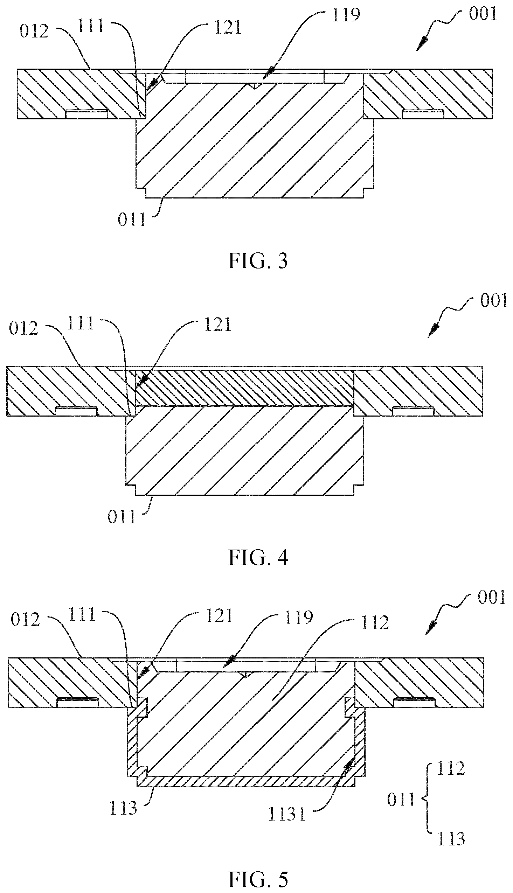

After the stamping is completed, a stamping groove 119 is formed at an end portion of the pole 011 extruded by the punch, as shown in FIG. 3. FIG. 3 is a schematic view of a structure where the pole 011 is axially pressed, so that a portion of the pole 011 in contact with the terminal 012 deforms toward the terminal 012 according to the embodiments of the present disclosure.

In addition, the mutually engaged structure between the pole 011 and the terminal 012 may be realized by one-time stamping, or one-time pre-pressing may be performed and then one-time stamping is performed. For example, a pressed area of a certain pole 011 is about 16.6 mm2, and a 6-tonnage stamping device may be used for stamping, and the stamping time is not more than 2 s.

It may be understood that the enlarged view in FIG. 1 is illustrated with the thick solid line as a position of the contact portion 013, and is not illustrated as structures of the contact portion 013. Specifically, after the electrode output component 001 provided by the embodiments of the present disclosure is cut along a cross section parallel to an axis of the electrode output component 001, it can be seen that a connection texture of the mutually engaged structure between the pole 011 and the terminal 012 is irregular by infection with a corresponding reagent, e.g., an acidic liquid. Herein, irregular means that the connection texture between the pole 011 and the terminal 012 are not a straight line.

In this embodiment, the terminal 012 are in stopping fit with the pole 011 along the axial direction, and a portion of the pole 011 in contact with the terminal 012 deforms toward the terminal 012 after the pole 011 is axially pressed, so that the pole 011 may expand toward the terminal 012 to fill the fitting gap between the pole 011 and the terminal 012, thereby forming the mutually engaged structure at the contact portion between the pole 011 and the terminal 012. As such, the connection strength between the pole 011 and the terminal 012 may be improved, and the connection reliability between the terminal 012 and the pole 011 may be improved.

In addition, when the terminal 012 is subjected to an external force such as a thrust force or a torsion force, in addition to a welding portion between the pole 011 and the terminal 012 resisting the external force, the mutually engaged structure between the pole 011 and the terminal 012 may also resist the external force. As such, the anti-pushing ability and the anti-twisting ability of the electrode output component 001 may be improved.

In an embodiment, the pole 011 includes a contact portion in contact with the terminal 012. A metal material of a part of the contact portion is different from a metal material of the terminal 012.

It may be understood that the metal materials are different, and corresponding metal fluidities are also different. As such, a fluidity of the metal material of a part of the contact portion is different from a fluidity of the metal material of the terminal 012. The fluidity of the metal material refers to the ability of the metal material to fill a surrounding gap or space during casting, forging, or stamping.

As such, when the contact portion deforms toward the terminal 012 since the pole 011 is axially pressed, a flowing speed when a part of the contact portion of the pole 011 deforms is different from a flowing speed when the terminal 012 deforms due to the extrusion of the pole 011, so that more uneven mutually engaged structures may be formed between deformed portions between the pole 011 and the terminal 012, thereby improving the connection strength between the pole 011 and the terminal 012, and improving the connection reliability between the terminal 012 and the pole 011.

In addition, it may be understood that different metal materials correspondingly have different coefficients of thermal expansion. As such, a material with a larger expansion coefficient may be pressed tightly against a material with a smaller expansion coefficient, or a material with a smaller expansion coefficient may be wrapped tightly against a material with a larger expansion coefficient, so as to improve the connection strength between the pole 011 and the terminal 012.

Referring to FIG. 4, FIG. 4 is a schematic view of a structure of a second electrode output component 001 according to the embodiments of the present disclosure. In an embodiment, the pole 011 includes a first metal member 112 and a second metal member 113 connected to each other. The terminal 012 is sleeved on the first metal member 112. The abutting portion 111 is disposed on an outer peripheral surface of the second metal member 113. The metal material of the terminal 012 is different from a metal material of the second metal member 113. As such, not only the pole 011 includes the contact portion with a flowing coefficient different from a flowing coefficient of the terminal 012 to improve the connection reliability between the pole 011 and the terminal 012, but also the pole 011 is composed of two metal members, so that the first metal member 112 may be provided as a metal with a lighter weight and a cheaper price to control the weight and material cost of the battery cell.

Referring to FIG. 5, FIG. 5 is a schematic view of a structure of a third electrode output component 001 according to the embodiments of the present disclosure. In an embodiment, the second metal member 113 is provided with a groove 1131. An end of the first metal member 112 away from a pressure-receiving end is embedded into the groove 1131. A portion of the first metal member 112 fitting with the terminal 012 is a first outer peripheral surface. The second metal member 113 includes a second outer peripheral surface. The second outer peripheral surface is located on a side of the abutting portion 111 away from a groove bottom of the groove 1131. The first outer peripheral surface and the second outer peripheral surface are arranged coaxially.

It may be understood that a material of the first metal member 112 is different from a material of the second metal member 113, so the connection difficulty between the first metal member 112 and the second metal member 113 is relatively large. Based on this, in this embodiment, by providing the groove 1131, a fitting surface between the first metal member 112 and the second metal member 113 may be increased, thereby improving the connection reliability between the first metal member 112 and the second metal member 113.

In addition, the first outer peripheral surface and the second outer peripheral surface are arranged coaxially, so that a part of the hole wall of the first through hole 121 is in contact with the first outer peripheral surface, and another part is in contact with the second outer peripheral surface. As such, when the pole 011 is axially pressed, the pole 011 and the terminal 012 form an interlocking first metal member-second metal member-terminal connection surface at the abutting portion, so as to improve the structural reliability of the electrode output component.

In an embodiment, the material of the terminal 012 is aluminum material, and the material of the second metal member 113 is copper material. Alternatively, the material of the terminal 012 and the material of the first metal member 112 are aluminum material, and the material of the second metal member 113 is copper material. As such, an interlocking aluminum (first metal member)-copper (second metal member)-copper (terminal) connection surface may be formed between the pole 011 and the terminal 012 at the abutting portion.

It may be understood that, compared with copper material, the terminal 012 and the first metal member 112 are provided as aluminum material, which may not only control their weights, but also control their material costs. In addition, in the battery cell, a negative current collecting member and a current collector of a negative plate are made of a same material, which is copper material. As such, through the above-described arrangement, the second metal member 113 is connected to the current collecting member. As such, compared with the full-copper pole 011, the conductivity of the pole 011 may be ensured, and the weight and material cost of the pole 011 may be controlled.

In addition, since a melting point of copper material and a melting point of aluminum material are different, welding difficulties of connecting surfaces between copper material and aluminum material are large. During welding, an intermediate compound is easily formed between copper material and aluminum material, which is not conducive to connecting copper material and aluminum material. As such, the pole 011 may be formed by a podium molding process, so that the first metal member 112 and the second metal member are reliably connected, and the formation of the intermediate compound due to welding may be avoided.

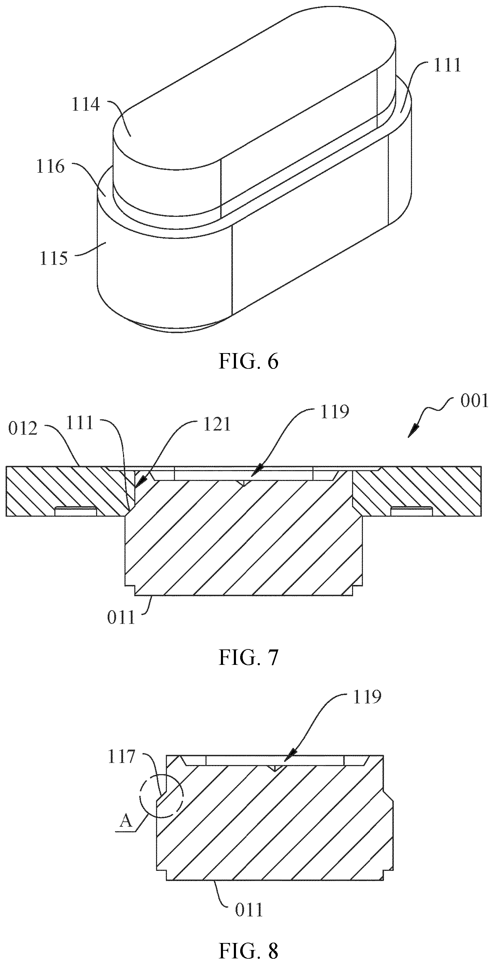

Referring to FIG. 6, in an embodiment, the pole 011 includes a first segment 114 and a second segment 115 connected to each other along the axial direction. An outer diameter of the second segment 115 is greater than an outer diameter of the first segment 114. An outer peripheral surface of the second segment 115 is connected to an outer peripheral surface of the first segment 114 through a first planar surface 116. The first planar surface 116 is perpendicular to an axis of the pole 011. The first planar surface 116 is the abutting portion 111. As such, the pole 011 has a simple structure and is easy to be manufactured, thereby controlling the cost of manufacturing the pole 011.

With reference to the aforementioned embodiments, under a case where the pole 011 includes the first metal member 112 and the second metal member 113, the first segment 114 is a side of the first metal member 112 away from the second metal member 113. The second segment 115 is the second metal member 113 and an end of the first metal member 112 inserted into the second metal member 113.

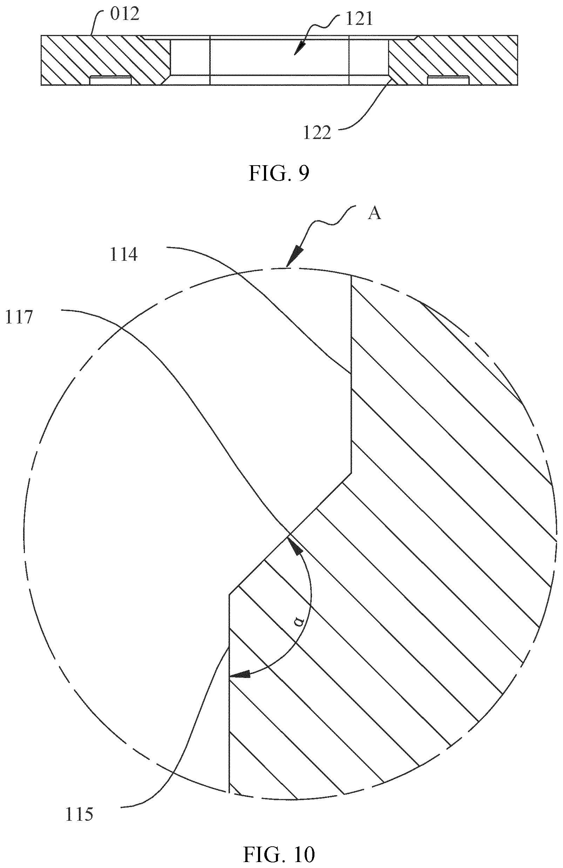

In addition to the structure shown in FIG. 6, the embodiments of the present disclosure further provide a structure of the electrode output component 001 shown in FIG. 7. Referring to FIG. 7 to FIG. 9, FIG. 7 is a schematic view of a structure of a fourth electrode output component 001 according to the embodiments of the present disclosure, FIG. 8 is a schematic view of a structure of a pole 011 of a fourth electrode output component 001 according to the embodiments of the present disclosure, and FIG. 9 is a schematic view of a structure of a terminal 012 of a fourth electrode output component 001 according to the embodiments of the present disclosure. In an embodiment, the terminal 012 is provided with a first through hole 121 for the pole 011 to pass through. The pole 011 includes a first segment 114 and a second segment 115 connected to each other along the axial direction. An outer diameter of the second segment 115 is greater than an outer diameter of the first segment 114. An outer peripheral surface of the second segment 115 is connected to an outer peripheral surface of the first segment 114 through a first inclined surface 117. One end of the first inclined surface 117 connected to the outer peripheral surface of the first segment 114 is disposed closer to the axis of the pole 011 than one end of the first inclined surface 117 connected to the outer peripheral surface of the second segment 115. The first inclined surface 117 is the abutting portion 111. A side of the hole wall of the first through hole 121 close to the abutting portion 111 is provided with a second inclined surface 122. The first inclined surface 117 is configured to be engaged with the second inclined surface 122 after the pole 011 is axially pressed.

With reference to the aforementioned embodiments, when the pole 011 includes the first metal member 112 and the second metal member 113, the first segment 114 is the side of the first metal member 112 away from the second metal member 113. The second segment 115 is the second metal member 113 and the end of the first metal member 112 inserted into the second metal member 113. The first inclined surface 117 is disposed on the second metal member 113.

In this embodiment, the first inclined surface 117 and the second inclined surface 122 are provided as the abutting portion 111 between the pole 011 and the terminal 012, a stress between related portions may be improved to avoid stress concentration. An area of an abutting surface between the pole 011 and the terminal 012 may be increased at a certain height and radial size, thereby improving the fitting reliability between the pole 011 and the terminal 012.

Referring to FIG. 10, FIG. 10 is an enlarged view of A in FIG. 8. In an embodiment, in a longitudinal cross section of the electrode output component 001, an included angle between a straight line where the first inclined surface 117 is located and a bus bar where the outer peripheral surface of the second segment 115 is located is α, where α satisfies: 110°≤α≤160°.

It may be understood that the included angle α includes, but is not limited to, 110°, 115°, 118°, 120°, 126°, 129°, 130°, 132°, 135°, 140°, 142°, 147°, 150°, 155°, 158°, and 160°.

In this embodiment, through the above-described limitations, an appropriate abutment angle is provided between the pole 011 and the terminal 012, so as to improve the abutting reliability of between the pole 011 and the terminal 012.

In addition, under a case where the metal material of the contact portion is different from the metal material of the terminal 012, it is beneficial to ensure the material fluidity of the contact portion between the terminal 012 and the pole 011 by limiting the included angle α, so as to form the mutually engaged structure between different materials having different fluidities, thereby forming an interlocking structure.

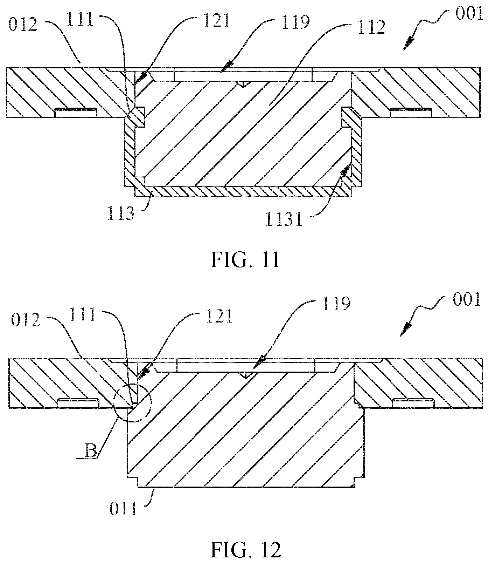

Accordingly, when the pole 011 is formed by combining the first metal member 112 and the second metal member 113, and the pole 011 is provided with the first inclined surface 117, the structure of the electrode output component 001 is shown in FIG. 11. FIG. 11 is a schematic view of a structure of a fifth electrode output component 001 according to the embodiments of the present disclosure.

In addition to the structure of the electrode output component 001 provided in the aforementioned embodiments, the embodiments of the present disclosure further provide a structure of an electrode output component 001 in the following embodiments. In an embodiment, the terminal 012 is provided with a first through hole 121 for the pole 011 to pass through. The pole 011 includes a first segment 114 and a second segment 115 connected to each other along the axial direction. An outer diameter of the second segment 115 is greater than an outer diameter of the first segment 114. An outer peripheral surface of the second segment 115 is connected to an outer peripheral surface of the first segment 114 through a first arc surface. An end of the first arc surface connected to the outer peripheral surface of the first segment 114 is disposed closer to the axis of the pole 011 than an end of the first arc surface connected to the outer peripheral surface of the second segment 115. The first arc surface is the abutting portion 111. A side of the hole wall of the first through hole 121 close to the abutting portion 111 is provided with a second arc surface. The first arc surface is configured to be engaged with the second arc surface after the pole 011 is axially pressed.

It may be understood that the first arc surface may be an arc-shaped surface protruding outward from a surface of the pole 011. Accordingly, the second arc surface is an arc-shaped surface recessed inward from a surface of the terminal 012. Accordingly, the first arc surface may also be an arc-shaped surface recessed inward from the surface of the pole 011. Accordingly, the second arc surface is an arc-shaped surface recessed inward from the surface of the terminal 012.

With reference to the aforementioned embodiments, under the case where the pole 011 includes the first metal member 112 and the second metal member 113, the first segment 114 is the side of the first metal member 112 away from the second metal member 113. The second segment 115 is the second metal member 113 and the end of the first metal member 112 inserted into the second metal member 113. The first arc surface is disposed on the second metal member 113.

In this embodiment, the second arc surface and the first arc surface are provided as the abutting portion 111 between the pole 011 and the terminal 012, the area of the abutting surface between the pole 011 and the terminal 012 may be increased at a certain height and radial size, thereby improving the fitting reliability between the pole 011 and the terminal 012.

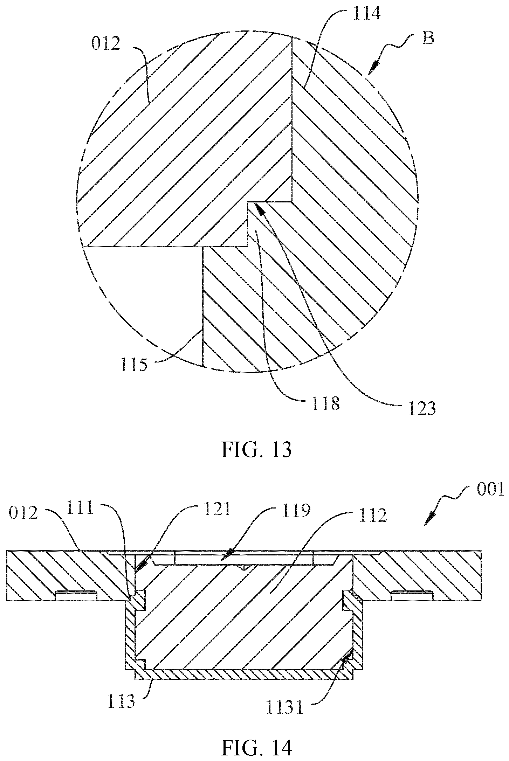

In addition to the structure of the electrode output component 001 provided in the aforementioned embodiments, the embodiments of the present disclosure further provide a structure of an electrode output component 001 shown in FIG. 12. Referring to FIG. 12 and FIG. 13, FIG. 12 is a schematic view of a structure of a sixth electrode output component 001 according to the embodiments of the present disclosure, and FIG. 13 is an enlarged view of B in FIG. 12. In an embodiment, the pole 011 includes a first segment 114 and a second segment 115 connected to each other along the axial direction. An outer diameter of the second segment 115 is greater than an outer diameter of the first segment 114. A step 118 is provided at a connection between the first segment 114 and the second segment 115. A step groove 123 is provided on a side of the hole wall of the first through hole 121 close to the abutting portion 111. The step 118 is configured to be engaged with a groove wall of the step groove 123 after the pole 011 is axially pressed.

With reference to the aforementioned embodiments, under the case where the pole 011 includes the first metal member 112 and the second metal member 113, the first segment 114 is the side of the first metal member 112 away from the second metal member 113. The second segment 115 is the second metal member 113 and the end of the first metal member 112 inserted into the second metal member 113. The step 118 is disposed on the second metal member 113.

Compared with the structure shown in FIG. 6 in which the outer peripheral surface of the second segment 115 is connected to the outer peripheral surface of the first segment 114 through the first planar surface 116, in this embodiment, the connection between the first segment 114 and the second segment 115 protrudes outward to from the step 118.

In this embodiment, the step groove 123 and the step 118 are provided as the abutting portion 111 between the pole 011 and the terminal 012, a positioning accuracy between the pole 011 and the terminal 012 may be improved, thereby improving the fitting reliability between the pole 011 and the terminal 012.

Accordingly, when the pole 011 is formed by combining the first metal member 112 and the second metal member 113, and the pole 011 is provided with the step 118, a structure of the electrode output component 001 is shown in FIG. 14. FIG. 14 is a schematic view of a structure of a seventh electrode output component 001 provided by the embodiments of the present disclosure.

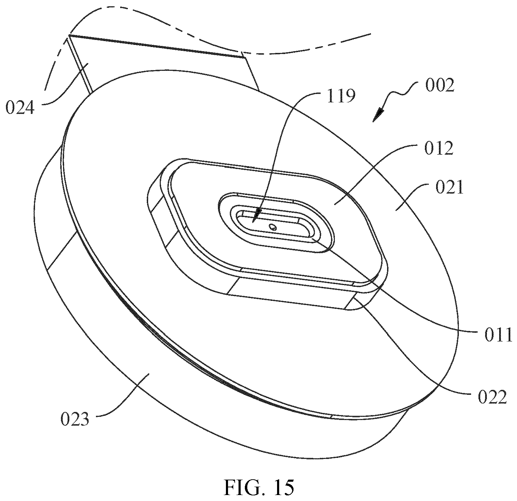

Referring to FIG. 15, FIG. 15 is a schematic view of a structure of a cover plate assembly 002 according to the embodiments of the present disclosure. Accordingly, the embodiments of the present disclosure further provide a cover plate assembly 002. The cover plate assembly 002 includes a cover plate 021, an upper plastic member 022, a lower plastic member 023, a current collecting member 024, a sealing ring, and the aforementioned electrode output component 001. The cover plate 021 includes a mounting hole. The pole 011 passes through the mounting hole. The terminal 012 is located on one side of the cover plate 021. The upper plastic member 022 is disposed between the terminal 012 and the cover plate 021. The lower plastic member 023 is disposed on another side of the cover plate 021. One end of the current collecting member 024 is connected to an end of the pole 011 away from the terminal 012. The sealing ring is disposed between the pole 011 and a side wall of the mounting hole.

In this embodiment, by adopting the aforementioned electrode output component 001, the pole 011 may expand toward the terminal 012 to fill the fitting gap between the pole 011 and the terminal 012. Furthermore, during a process of the pole 011 deforming toward the terminal 012, the terminal 012 also deforms due to the extrusion of the pole 011, so as to form a mutually engaged structure at the contact portion between the pole 011 and the terminal 012. As such, the connection strength between the pole 011 and the terminal 012 may be improved, and the connection reliability between the terminal 012 and the pole 011 may be improved, thereby improving the reliability of the cover plate assembly 002.

Accordingly, the embodiments of the present disclosure further provide a battery cell. The battery cell includes a casing, an electrode assembly, and the aforementioned cover plate assembly 002. The casing includes an accommodating cavity. The electrode assembly is disposed in the accommodating cavity. The cover plate 021 is connected to the casing and closes an opening of the accommodating cavity, and another end of the current collecting member 024 is connected to the electrode assembly.

In this embodiment, by adopting the aforementioned cover plate assembly 002, the pole 011 may expand toward the terminal 012 to fill the fitting gap between the pole 011 and the terminal 012. Furthermore, during a process of the pole 011 deforming toward the terminal 012, the terminal 012 also deforms due to the extrusion of the pole 011 to form the mutually engaged structure at the contact portion between the pole 011 and the terminal 012. As such, the connection strength between the pole 011 and the terminal 012 may be improved, and the connection reliability between the terminal 012 and the pole 011 may be improved, thereby improving the reliability of the battery cell.

The embodiments of the present disclosure have been described in detail above, and the principles and embodiments of the present disclosure have been described herein by applying specific examples, and the description of the above embodiments is only for helping to understand the technical solutions of the present disclosure and the core ideas thereof. In addition, for those skilled in the art, there will be changes in the specific implementations and the scope of application based on the ideas of the present disclosure. In summary, the content of the description should not be understood as limiting the present disclosure.

## Claims

1. An electrode output component (001), **characterized in that** the electrode output component (001) comprises:
a pole (011), wherein an outer peripheral surface of the pole (011) is provided with an abutting portion (111); and
a terminal (012) sleeved on one end of the pole (011) and abutting against the abutting portion (111) along an axial direction of the pole (011);
wherein the pole (011) and the terminal (012) are engaged with each other.

2. The electrode output component (001) according to claim 1, **characterized in that** the pole (011) comprises the contact portion (013) in contact with the terminal (012), and a metal material of a part of the contact portion (013) is different from a metal material of the terminal (012).

3. The electrode output component (001) according to claim 2, **characterized in that** the pole (011) comprises a first metal member (112) and a second metal member (113) connected to each other, the terminal (012) is sleeved on the first metal member (112), the abutting portion (111) is disposed on an outer peripheral surface of the second metal member (113), and the metal material of the terminal (012) is different from a metal material of the second metal member (113).

4. The electrode output component (001) according to claim 3, **characterized in that** the second metal member (113) is provided with a groove (1131), one end of the first metal member (112) is embedded in the groove (1131), a portion of the first metal member (112) fitting with the terminal (012) is a first outer peripheral surface, the second metal member (113) comprises a second outer peripheral surface, the second outer peripheral surface is located on a side of the abutting portion (111) away from a groove bottom of the groove (1131), and the first outer peripheral surface and the second outer peripheral surface are arranged coaxially.

5. The electrode output component (001) according to claim 3, **characterized in that** the metal material of the terminal (012) is aluminum material, and the metal material of the second metal member (113) is copper material; or wherein the metal material of the terminal (012) and a metal material of the first metal member (112) are aluminum material, and the metal material of the second metal member (113) is copper material.

6. The electrode output component (001) according to any one of claims 1 to 5, **characterized in that** the pole (011) comprises a first segment (114) and a second segment (115) connected to each other along the axial direction, an outer diameter of the second segment (115) is greater than an outer diameter of the first segment (114), an outer peripheral surface of the second segment (115) is connected to an outer peripheral surface of the first segment (114) through a first planar surface (116), the first planar surface (116) is perpendicular to an axis of the pole (011), and the first planar surface (116) is the abutting portion (111).

7. The electrode output component (001) according to any one of claims 1 to 5, **characterized in that** the terminal (012) is provided with a first through hole (121) for the pole (011) to pass through, the pole (011) comprises a first segment (114) and a second segment (115) connected to each other along the axial direction, an outer diameter of the second segment (115) is greater than an outer diameter of the first segment (114), and an outer peripheral surface of the second segment (115) is connected to an outer peripheral surface of the first segment (114) through a first inclined surface (117); wherein an end of the first inclined surface (117) connected to the outer peripheral surface of the first segment (114) is disposed closer to an axis of the pole (011) than an end of the first inclined surface (117) connected to the outer peripheral surface of the second segment (115), and the first inclined surface (117) is the abutting portion (111); and wherein a side of a hole wall of the first through hole (121) close to the abutting portion (111) is provided with a second inclined surface (122), and the first inclined surface (117) is configured to be engaged with the second inclined surface (122) after the pole (011) is axially pressed.

8. The electrode output component (001) according to claim 7, **characterized in that** in a longitudinal cross section of the electrode output component (001), an included angle between a straight line where the first inclined surface (117) is located and a bus bar where the outer peripheral surface of the second segment (115) is located is α, where α satisfies: 110°≤α≤160°.

9. The electrode output component (001) according to any one of claims 1 to 5, **characterized in that** the terminal (012) is provided with a first through hole (121) for the pole (011) to pass through, the pole (011) comprises a first segment (114) and a second segment (115) connected to each other along the axial direction, an outer diameter of the second segment (115) is greater than an outer diameter of the first segment (114), and an outer peripheral surface of the second segment (115) is connected to an outer peripheral surface of the first segment (114) through a first arc surface; wherein an end of the first arc surface connected to the outer peripheral surface of the first segment (114) is disposed closer to an axis of the pole (011) than an end of the first arc surface connected to the outer peripheral surface of the second segment (115), and the first arc surface is the abutting portion (111); and wherein a side of a hole wall of the first through hole (121) close to the abutting portion (111) is provided with a second arc surface, and the first arc surface is configured to be engaged with the second arc surface after the pole (011) is axially pressed.

10. The electrode output component (001) according to claim 9, **characterized in that** the first arc surface is an arc-shaped surface protruding outward from a surface of the pole (011), and the second arc surface is an arc-shaped surface recessed inward from a surface of the terminal (012); or
wherein the first arc surface is an arc-shaped surface recessed inward from a surface of the pole (011), and the second arc surface is an arc-shaped surface recessed inward from the surface of the terminal (012).

11. The electrode output component (001) according to any one of claims 1 to 5, **characterized in that** the pole (011) comprises a first segment (114) and a second segment (115) connected to each other along the axial direction, an outer diameter of the second segment (115) is greater than an outer diameter of the first segment (114), a step (118) is provided at a connection between the first segment (114) and the second segment (115), a step groove (123) is provided on a side of a hole wall of the first through hole (121) close to the abutting portion (111), and the step (118) is configured to be engaged with a groove wall of the step groove (123) after the pole (011) is axially pressed.

12. The electrode output component (001) according to any one of claims 7 to 11, **characterized in that** an outer diameter of the abutting portion (111) is greater than an aperture of the first through hole (121).

13. The electrode output component (001) according to claim 12, **characterized in that** the abutting portion (111) is a shoulder structure or a collar structure disposed on the pole (011), or the abutting portion (111) is a bump disposed on the outer peripheral surface of the pole (011).

14. A cover plate assembly (002), **characterized in that** the cover plate assembly (002) comprises:
a cover plate (021) comprising a mounting hole;
the electrode output component (001) according to any one of claims 1 to 13, wherein the pole (011) passes through the mounting hole, and the terminal (012) is located on one side of the cover plate (021);
an upper plastic member (022) disposed between the terminal (012) and the cover plate (021);
a lower plastic member (023) disposed on another side of the cover plate (021);
a current collecting member (024), wherein one end of the current collecting member (024) is connected to an end of the pole (011) away from the terminal (012); and
a sealing ring disposed between the pole (011) and a side wall of the mounting hole.

15. A battery cell, **characterized in that** the battery cell comprises:
a casing comprising an accommodating cavity;
an electrode assembly disposed in the accommodating cavity; and
the cover plate assembly (002) according to claim 14, wherein the cover plate (021) is connected to the casing and closes an opening of the accommodating cavity, and another end of the current collecting member (024) is connected to the electrode assembly.
